# EUROPÄISCHE PATENTSCHRIFT

(11) **EP 0 396 125 B1**
(45) Veröffentlichungstag und Bekanntmachung des Hinweises auf die Patenterteilung: **08.09.1993**
(21) Anmeldenummer: 90108338.6
(22) Anmeldetag: 03.05.1990
(51) Int. Cl.: H02M 3/335

(54) **Durchflusswandler**
Forward conventer
Conventisseur direct

(30) Priorität: 05.05.1989 DE 3914799
(43) Veröffentlichungstag der Anmeldung: 07.11.1990
(73) Patentinhaber: Alcatel SEL Aktiengesellschaft, D-70435 Stuttgart (DE); ALCATEL N.V., NL-1077 XX Amsterdam (NL)
(72) Erfinder: Wölfel, Werner, D-7000 Stuttgart 31 (DE)
(74) Vertreter: Pechhold, Eberhard, Dipl.-Phys.

(56) Entgegenhaltungen:
- DE-A- 3 727 170
- US-A- 4 672 303
- US-A- 4 870 555

## Beschreibung

Die Erfindung betrifft Durchflußwandler, wie sie im Oberbegriff des Patentanspruchs 1 und im Oberbegriff des Patentanspurchs 2 beschrieben sind.

Ein Durchflußwandler dieser Art ist z.B. aus der DE-OS 37 27 170 bekannt. Hier werden (siehe z.B. Fig. 2 der DE-OS) bei einem mit einem Transformator ausgestattenten Durchflußwandler anstelle der sonst üblichen sekundärseitigen Leistungsdioden Leistungs-MOSFETS eingesetzt, die im durchgesteuerten Zustand über ihre Source-Drain Strecke einen geringeren Spannungsabfall aufweisen als Dioden oder Schottky-Dioden und dadurch weniger Verluste als diese erzeugen.

Das Signal zur Ansteuerung der MOSFETS wird bei dem bekannten Durchflußwandler besonderen Sekundärwicklungen des Transformators entnommen und über kompliziert aufgebaute Zweipole den Gates der MOSFETS zugeführt. Dies hat neben dem Aufwand für die zusätzlichen Transformatorwicklungen und die Bauelemente der Zweipole den Nachteil, daß die Schaltzeitpunkte der MOSFETS gegenüber denen des primärseitigen Taktschalters infolge der Schaltverzögerung der Transformatorinduktivität verschoben sind, eine exakt mit dem Taktschalter synchrone Betriebsweise, die optimalen Wirkungsgrad garantiert, demnach nicht gesichert ist.

Wird eine Abmagnetisierungswicklung verwendet, besteht, insbesondere bei Überlastung der Primärspannungsquelle, die Gefahr, daß die notwendige Steuerspannung für den invers betriebenen MOSFET am Ausgang der dessen Steuerspannung liefernden Sekundärwicklung zu spät oder überhaupt nicht erreicht wird.

Bei einem ohne Transformator betriebenen Durchflußwandler ist eine Ansteuerung über Sekundärwicklungen wie beim Stand der Technik ohnehin nicht möglich.

Es ist Aufgabe der Erfindung, einen Durchflußwandler der o.g. Art hinsichtlich der Ansteuerung seiner an Diodenstelle verwendeten MOSFETS so zu verbessern, daß ein mit dem Taktschalter exakt synchroner Betrieb dieser MOSFETS möglich ist. Außerdem soll der Aufwand für die Ansteuerung der MOSFETS verringert und die Notwendigkeit des Einsatzes eines Transformators beseitigt werden.

Diese Aufgabe wird für einen ohne galvanische Trennung arbeitenden Durchflußwandler durch die im kennzeichnenden Teil des Patentanspruchs 1 angegebenen Merkmale, für einen mit Trenntransformator ausgestatteten Durchflußwandler durch die im kennzeichnenden Teil des Patentanspruchs 2 angegebenen Merkmale gelöst.

Weiterbildungen des Durchflußwandlers nach der Erfindung sind in den Patentansprüchen 3 bis 7 angegeben.

Hierbei betrifft der Gegenstand des Patentanspruches 3 einen einfachen Inverter zur Ansteuerung des invers zum Taktschalter arbeitenden MOSFET.

Patentanspruch 4 betrifft die Ansteuerung des als Richtungsleiter arbeitenden MOSFET und des den Freilaufstromkreis ermöglichenden MOSFET in einem Durchflußwandler mit galvanischer Trennung. Gegenstand des Patentanspruchs 5 ist ein Ausführungsbeispiel, in dem in einem Durchflußwandler mit Transformator alle sekundärseitigen MOSFETS auf gleichem Source-Potential liegen. Hierdurch wird die Ansteuerung für diese Bauelemente besonders einfach.

Patentanspruch 6 betrifft den Einsatz von MOSFETS als Richtungsleiter und als Freilaufstromkreise ermöglichende Bauelemente bei Durchflußwandlern mit einem geregelten Hauptausgang und mehreren Nebenausgängen.

Patentanspruch 7, schließlich, ermöglicht durch eine bei MOSFETS für sich bekannte Maßnahme eine Absenkung der Durchflußwandler-Verluste und damit eine Erhöhung des Wirkungsgrades.

Anhand zweier Figuren sollen nun Ausführungsbeispiele des Durchflußwandlers nach der Erfindung beschrieben und ihre Wirkungsweise erklärt werden.

Figur 1 zeigt schmatisch einen Durchflußwandler nach der Erfindung ohne Transformator.

Figur 2 zeigt einen Durchflußwandler nach der Erfindung mit Trenntransformator.

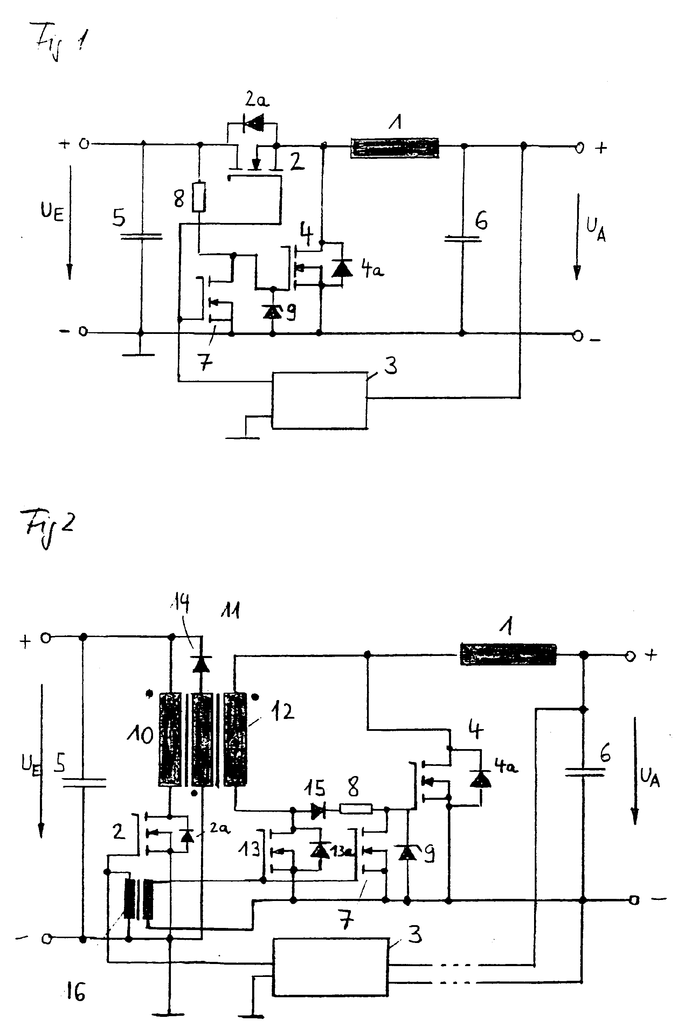

In Fig. 1 ist ein Durchflußwandler dargestellt, der eine Eingangsgleichspannung U_{E}, die an einem Eingangskondensator 5 ansteht, in eine niedrigere Ausgangsgleichspannung U_{A} umwandelt. Die Ausgangsklemmen, an die eine mit Spannung zu versorgende Last angeschlossen wird, sind durch einen Ausgangskondensator 6 überbrückt. Der Durchflußwandler enthält weiterhin eine Speicherdrossel 1, einen Taktschalter und eine Steuerschaltung 3, die den Taktschalter, einen Leistungs-MOSFET 2 mit Invers-Diode 2a, mit einem pulsbreitenmodulierten Steuersignal ansteuert. Die Breite der Steuerimpulse ist dabei abhängig von der Höhe der Ausgangsspannung in bezug auf eine eingestellte Sollspannung.

Um diese Pulsbreitenregelung zu ermöglichen, sind die Ausgangsklemmen des Durchflußwandlers mit der Steuerschaltung 3 verbunden.

Der Durchflußwandler enthält einen weiteren Leistungs-MOSFET 4 mit Invers-Diode 4a, der hier anstelle einer sonst üblichen Diode oder Schottky-Diode eingesetzt ist und invers zum Taktschalter 2 betrieben wird. Als Inverter dient ein weiterer MOSFET 7, der das von der Steuerschaltung 3 an den Taktschalter 2 ausgegebene Steuersignal invertiert, indem er eine dem Gateanschluß des Leistungs-MOSFET 4 über einen Widerstand 8 zugeführte, durch eine Z-Diode 9 in ihrer Höhe begrenzte, positive Spannung während der Durchschaltzeiten des Taktschalters kurzschließt und den Leistungs-MOSFET 4 damit sperrt. Anstelle des MOSFET 7 kann auch ein Bipolar-Transistor oder ein anderes, als Inverter verwendbares Bauelement eingesetzt werden.

In Fig. 2 ist ein Durchflußwandler mit galvanischer Trennung zwischen den positiven Klemmen des Eingangs und des Ausgangs dargestellt. Auch hier wird eine am Eingangskondensator 5 anstehende Eingangsgleichspannung U_{E} in eine am Ausgangskondensator 6 anstehende Ausgangsgleichspannung U_{A} gewandelt.

Anders als die in Fig.1 dargestellte Schaltung, enthält die Schaltung nach Fig. 2 einen Transformator, mit dessen Primärwicklung 10 der Taktschalter 2 in Reihe liegt. Der in die Speicherinduktivität 1 zu deren magnetischer Erregung fließende Strom wird einer Sekundärwicklung 12 entnommen. Er fließt dabei über einen Leistungs-MOSFET 13 mit Invers-Diode 13a, der synchron mit dem Taktschalter 2 angesteuert wird und Richtungsleitfunktion ausübt, d.h., einen Stromrückfluß über die Sekundärwicklung des Transformators verhindert. Der einfacheren Ansteuerung wegen ist der MOSFET 13 auf der der Speicherdrossel 1 abgewandten Seite der Transformator-Sekundärwicklung angeordnet.

Der Transformator besitzt schließlich noch eine Abmagnetisierungswicklung 11 zur Rückspeisung von im Transformatorkern gespeicherter Energie über eine Diode 14 in den Eingangskondensator 5.

Der in Fig. 2 dargestellte Durchflußwandler enthält, wie der im Zusammenhang mit Fig.1 beschriebene, zur Bildung eines Freilaufstromkreises einen über einen MOSFET 7, invers zum Taktschalter 2 angesteuerten Leistungs-MOSFET 4, der im durchgesteuerten Zustand einen sehr niedrigen Spannungsabfall an seiner Drain-Source-Strecke aufweist. Die zur Durchsteuerung benötigte Gate-Source-Spannung wird an der der Speicherdrossel abgewandten Klemme der Sekundärwicklung 12 des Transformators abgegriffen. Sie gelangt über eine Diode 15 und einen Widerstand 8 an den Gate-Anschluß des Leistungs-MOSFET 4 und den mit ihm verbundenen Drain-Anschluß des MOSFET 7. Auch hier ist zum Schutz vor Überspannungen am Gate des Leistungs-MOSFET der Drain-Source-Strecke des MOSFET 7 eine Z-Diode 9 parallelgeschaltet.

Die positive Spannung am Gate des Leistungs-MOSFET 4 kann auch durch eine beliebige andere positive Spannungsquelle geliefert werden. In dem hier beschriebenen Falle wird ausgenutzt, daß nach Unterbrechen des Primärstromes durch den Taktschalter 2 an der der Speicherdrossel abgewandten Seite der Sekundärwicklung 12 eine zeitlang positives Potential ansteht, das zur positiven Aufladung des Gate des Leistungs-MOSFET 4 ausreicht.

Da bei dem in Fig. 2 dargestellten Durchflußwandler eine Potentialtrennung bestehen soll, muß diese auch in der Verbindungsleitung zwischen der positiven Ausgangsklemme und der Steuerschaltung 3 sowie in der Steuerzuleitung zu den sekundärseitigen MOSFETS vorhanden sein.

In der Verbindungsleitung zwischen Ausgang und Steuerschaltung wird heute meist ein Optokoppler (nicht dargestellt) zur Potentialtrennung vorgesehen. Die Potentialtrennung zwischen der Steuerzuleitung zum Taktschalter und der Steuerzuleitung zu den sekundärseitigen MOSFETS kann entweder auch mittels eines Optokopplers erfolgen, oder es wird, wie in Fig.2, ein Treiberübertrager 16 eingesetzt.

Weist der Transformator in Fig. 2 mehrere Sekundärwicklungen mit getrennten Wandlerstromkreisen auf (nicht dargestellt), so gibt es mehrere Spannungsausgänge mit im allgemeinen unterschiedlichen Ausgangsspannungen, von denen ein Ausgang, der sogenannte Hauptausgang, die Spannungsnachregelung beeinflußt. Die anderen sogenannten Nebenausgänge haben für gewöhnlich keine eigenen Spannungsregelungen.

In diesem Falle müssen die MOSFETS der einzelnen Wandlerkreise über voneinander potentialgetrennte Steuerstromkreise angesteuert werden.

## Patentansprüche

1. Durchflußwandler mit mindestens einer Speicherinduktivität (1), einem in Reihe mit einer Wicklung dieser Speicherinduktivität angeordneten, von einer Steuerschaltung (3) abhängig von der Höhe der Ausgangsspannung in bezug auf eine eingestellte Sollspannung angesteuerten Taktschalter (2) und mindestens einem während der Öffnungszeiten des Taktschalters einen Freilaufstromkreis über die Speicherinduktivität und eine an den Ausgang des Durchflußwandlers angeschlossene Last ermöglichenden, invers zum Taktschalter betriebenen MOS-Feldeffekttransistor (4) (MOSFET),
**dadurch gekennzeichnet**, daß dem MOSFET (4) das den Taktschalter (2) schaltende Steuersignal über einen dem Gate des MOSFET (4) vorgeschalteten, als Inverter betriebenen weiteren Transistor (7) zugeführt wird.

2. Durchflußwandler mit einem Transformator, einem in Reihe mit dessen Primärwicklung geschalteten, von einer Steuerschaltung (3) abhängig von der Höhe der Ausgangsspannung in bezug auf eine eingestellte Sollspannung angesteuerten Taktschalter (2), mindestens einer, mit einer Sekundärwicklung des Transformators und einem ersten, als Richtungsleiter arbeitenden MOSFET (13) in Reihe geschalteten Speicherinduktivität (1) und mindestens einem zweiten, während der Öffungszeiten des Taktschalters einen Freilaufstromkreis über die Speicherinduktivität und eine an den Ausgang des Durchflußwandlers angeschlossene Last ermöglichenden MOSFET (4), wobei der erste MOSFET (13) während der Zeit, in der der Taktschalter geschlossen ist und der zweite MOSFET (4) während der Zeit, in der der Taktschalter geöffnet ist, durchgesteuert wird,
**dadurch gekennzeichnet**, daß das den Taktschalter (2) steuernde Signal dem Gate des ersten MOSFET (13) direkt und dem Gate des zweiten MOSFET (4) über einen vorgeschalteten als Inverter arbeitenden weiteren Transistor (7) zugeführt wird.

3. Durchflußwandler nach Patentanspruch 1,
**dadurch gekennzeichnet**, daß der weitere, als Inverter arbeitende Transistor (7) ein MOSFET ist.

4. Durchflußwandler nach Patentanspruch 2,
**dadurch gekennzeichnet**, daß den sekundärseitigen Transistoren (4, 7, 13) das Steuersignal des Taktschalters (2) über ein Potentialtrennelement (16) zugeführt wird.

5. Durchflußwandler nach Patentanspruch 4,
**dadurch gekennzeichnet**, daß der als Inverter arbeitende weitere Tansistor (7) ein MOSFET ist, daß die Source-Anschlüsse des ersten, als Richtungsleiter arbeitenden MOSFET (13) und des zweiten, den Freilaufstromkreis ermöglichenden MOSFET (4) und des als Inverter geschalteten MOSFET (7) miteinander verbunden sind, daß der Drain-Anschluß des ersten MOSFET (13) an den nicht mit der Speicherinduktivität (1) verbundenen Anschluß der Sekundärwicklung (12) des Transformators und der Drain-Anschluß des zweiten MOSFET (4) an den mit der Speicherinduktivität verbundenen Anschluß der Sekundärwicklung des Transformators angeschlossen ist, daß der Drain-Anschluß des als Inverter arbeitenden MOSFET (7) über einen Strombegrenzungswiderstand (8) und eine mit ihrer Kathode zum Drain-Anschluß des als Inverter arbeitenden MOSFET (7) hin geschaltete Diode (15) mit dem Drain-Anschluß des ersten MOSFET (13) verbunden ist, und daß die Gate-Source Strecke des zweiten MOSFET (4) durch eine parallel geschaltete Z-Diode (9) gegen Überspannung geschützt ist.

6. Durchflußwandler nach einem der Patentansprüche 4 oder 5, **dadurch gekennzeichnet**, daß mehrere Sekundärwicklungen des Transformators vorgesehen sind, die je für sich mit Speicherinduktivitäten, mit als Richtungsleiter arbeitenden und mit invers betriebenen, Freilaufstromkreise ermöglichenden MOSFETS beschaltet sind und Spannungen an je einen Ausgang liefern, wobei die Abweichung der Spannung an einem der Ausgänge von einer eingestellten Sollspannung die Steuerung des Taktschalters beeinflußt.

7. Durchflußwandler nach einem der vorstehenden Patentansprüche,
**dadurch gekennzeichnet**, daß mindestens einem der als Richtungsleiter arbeitenden oder der einen Freilaufstromkreis ermöglichenden MOSFETS mindestens ein weiterer, gleichartiger MOSFET parallelgeschaltet ist und parallel angesteuert wird.

## Claims

1. A forward converter having at least one storage inductance (1), a clock switch (2) connected in series with a winding of this storage inductance and actuated by a control circuit (3) as a function of the magnitude of the output voltage relative to a set reference voltage and at least one MOS field effect transistor (MOSFET) (4) which is operated inversely to the clock switch and, during the ON periods of the clock switch, permits the establishment of a free-running circuit via the storage inductance and the connection of a load to the output of the forward converter,
characterized in that
the MOSFET (4) receives the control signal for switching the clock switch (2) via a further transistor (7) that is connected ahead of the gate of the MOSFET (4) and is operated as inverter.

2. A forward converter including a transformer, a clock switch (2) connected in series with'the-primary winding of said transformer and actuated by a control circuit (3) as a function of the magnitude of the output voltage relative to a set reference voltage, at least one storage inductance (1) connected in series with a secondary winding of the transformer and with a first MOSFET (13) operating as rectifier element, and at least one second MOSFET (4) which, during the ON periods of the clock switch, permits the establishment of a free-running circuit via the storage inductance and the connection of a load to the output of the forward converter, with the first MOSFET (13) being controlled to be ON during the time in which the clock switch is closed and the second MOSFET (4) being controlled to be ON during the time in which the clock switch is open,
characterized in that
the signal controlling the clock switch is fed directly to the gate of the first MOSFET (13) and is fed to the gate of the second MOSFET (4) via a further transistor (7) connected to its input and operating as inverter.

3. A forward converter according to claim 1, characterized in that the further transistor (7) operating as inverter is a MOSFET.

4. A forward converter according to claim 2, characterized in that the control signal of the clock switch (2) is fed to the transistors (4, 7, 13) on the secondary side via a potential separating element (16).

5. A forward converter according to claim 4, characterized in that the further transistor (7) operating as an inverter is a MOSFET; the source terminals of the first MOSFET (13) operating as the rectifier element and those of the second MOSFET (4) enabling the establishment of a free-running circuit and of the MOSFET (7) connected as inverter are connected with one another; the drain terminal of the first MOSFET (13) is connected to the terminal of the transformer secondary winding (12) which is not connected with the storage inductance (1) and the drain terminal of the second MOSFET (4) is connected with the terminal of the transformer secondary winding which is connected with the storage inductance; the drain terminal of the MOSFET (7) operating as inverter is connected with the drain terminal of the first MOSFET (13) via a current limiting resistor (8) and a diode (15) whose cathode is connected to operate toward the drain terminal of the MOSFET (7) operating as inverter; and the gate-source path of the second MOSFET (4) is protected against excess voltages by a parallel connected Zener diode (9).

6. A forward converter according to one of claims 4 or 5, characterized in that a plurality of secondary transformer windings are provided which are each equipped with a storage inductance, with MOSFET's operating as rectifier elements and with inversely operated MOSFET's which enable the establishment of free-running circuits and each furnish voltages to one output, with the deviation of the voltage at one of the outputs from a set reference voltage influencing the control of the clock switch.

7. A forward converter according to one of the preceding claims, characterized in that at least one further identical MOSFET is connected in parallel with at least one of the MOSFET's operating as rectifier element or enabling the establishment of a free-running circuit and is actuated in parallel.

## Revendications

1. Convertisseur direct avec au moins une inductance d'alimentation (1), un générateur de signal d'horloge (2) disposé en série avec un bobinage de cette inductance d'alimentation et piloté par un circuit de pilotage (3) en fonction de la valeur de la tension de sortie par rapport à une tension prescrite, et au moins un transistor à effet de champ MOS (4) (MOSFET), polarisé en sens inverse du générateur de signal d'horloge et autorisant, pendant les temps d'ouverture du générateur de signal d'horloge, un circuit en roue libre par l'intermédiaire de l'inductance d'alimentation et d'une charge reliée à la sortie du convertisseur direct,
convertisseur caractérisé par le fait qu'au transistor MOSFET (4) on amène, par l'intermédiaire d'un autre transistor (7) exploité en inverseur et monté en amont de la grille du transistor MOSFET (4), le signal de pilotage qui commute le générateur de signal d'horloge (2).

2. Convertisseur direct avec un transformateur, un générateur de signal d'horloge (2) monté en série avec son bobinage primaire et piloté par un circuit de pilotage (3) fonction de la valeur de la tension de sortie par rapport à une tension prescrite, au moins une inductance d'alimentation (1) montée en série avec un bobinage secondaire du transformateur et avec un premier transistor MOSFET (13) travaillant comme conducteur unidirectionnel, et avec au moins un second transformateur MOSFET (4) autorisant, pendant les temps d'ouverture du générateur de signal d'horloge, un circuit de roue libre par l'intermédiaire de l'inductance d'alimentation et d'une charge reliée à la sortie du convertisseur direct, étant précisé que le premier transistor MOSFET (13) est conducteur pendant le temps pendant lequel le générateur de signal d'horloge est fermé et que le second transistor MOSFET (4) est conducteur pendant le temps pendant lequel le générateur de signal d'horloge est ouvert,
convertisseur caractérisé par le fait que le signal pilotant le générateur de signal d'horloge (2) est amené à la grille du premier transistor MOSFET (13) directement et, à la grille du second transistor MOSFET (4), par l'intermédiaire d'un autre transistor (7), ,travaillant comme inverseur.

3. Convertisseur direct selon la revendication 1, caractérisé par le fait que l'autre transistor (7) travaillant comme inverseur est un transistor MOSFET.

4. Convertisseur direct selon la revendication 2, caractérisé par le fait qu'aux transistors (4, 7, 13) situés du côté secondaire, on amène le signal de pilotage du générateur de signal d'horloge (2) par l'intermédiaire d'un élément (16) de séparation du potentiel.

5. Convertisseur direct selon la revendication 4, caractérisé par le fait que l'autre transistor (7) travaillant comme inverseur est un transistor MOSFET, par le fait que les bornes de source du premier transistor MOSFET 13 travaillant comme conducteur unidirectionnel et du second transistor MOSFET (4), autorisant le circuit de roue libre et du transistor MOSFET (13) monté comme inverseur sont réunies ensemble, par le fait que la borne de drain du premier transistor MOSFET 13 est reliée à la borne du bobinage secondaire (12) du transformateur non reliée à l'inductance d'induction (1) et que la borne de drain du second transistor MOSFET (4) est reliée à la borne du bobinage secondaire du transformateur reliée à l'inductance d'alimentation, par le fait que la borne de drain du transistor MOSFET (7) travaillant comme inverseur est reliée, par l'intermédiaire d'une résistance (8) de limitation de l'intensité et d'une diode (15) reliée, par sa cathode, à la borne de drain du transformateur MOSFET (7) travaillant comme inverseur, avec la borne de drain du premier transistor MOSFET (13), et par le fait que l'élément de circuit grille-source du second transistor MOSFET (4) est protégée à l'égard d'une surtension par une diode Z (9) montée en parallèle.

6. Convertisseur direct selon l'une des revendications 4 ou 5, caractérisé par le fait que sont prévus plusieurs bobinages secondaires du transformateur qui sont, chacun pour soi, mis en circuit avec des inductances d'alimentation, avec des transistors MOSFET travaillant comme conducteurs unidirectionnels et avec des transistors MOSFET polarisés en sens inverse et autorisant des circuits de roue libre, et qui fournissent des tensions à, chacun, une sortie, étant précisé que l'écart entre la tension à l'une des sorties et une tension prescrite influence le pilotage du générateur de signal d'horloge.

7. Convertisseur direct selon l'une des revendications précédentes,
caractérisé par le fait qu'en parallèle à au moins l'un des transistors MOSFETS travaillant comme conducteur unidirectionnel ou des transistors MOSFET autorisant un circuit de roue libre est monté au moins un autre transistor MOSFET identique et qu'il est piloté en parallèle.
